Europäisches Patentamt

European Patent Office

Office européen des brevets

(19)

(11) Numéro de publication : **0 041 016 B1**

(12) # FASCICULE DE BREVET EUROPÉEN

(45) Date de publication du fascicule du brevet : **28.12.83**

(51) Int. Cl.³ : **B 60 R 5/04**

(21) Numéro de dépôt : **81400799.3**

(22) Date de dépôt : **21.05.81**

(54) **Tablette de rangement s'escamotant automatiquement.**

(30) Priorité : **23.05.80 FR 8011764**

(43) Date de publication de la demande : **02.12.81 Bulletin 81/48**

(45) Mention de la délivrance du brevet : **28.12.83 Bulletin 83/52**

(84) Etats contractants désignés : **DE GB IT**

(56) Documents cités :
**EP-A- 0 028 184
DE-A- 2 659 684
FR-A- 2 222 852
US-A- 4 222 600**

(73) Titulaire : **SOCIETE ANONYME AUTOMOBILES CITROEN**
**117 à 167, Quai André Citroen**
**F-75747 Paris Cedex 15 (FR)**

**AUTOMOBILES PEUGEOT**
**75, avenue de la Grande Armée**
**F-75116 Paris (FR)**

(72) Inventeur : **Lalanne, André Pierre**
**20, avenue de Dampierre**
**F-78320 Le Mesnil-St-Denis (FR)**

(74) Mandataire : **Boivin, Claude**
**9, rue Edouard-Charton**
**F-78000 Versailles (FR)**

EP 0 041 016 B1

## Tablette de rangement s'escamotant automatiquement

La présente invention concerne une tablette de rangement dont un bord est articulé sur un panneau mobile relevable, par exemple un hayon d'un véhicule automobile, et qui vient automatiquement en position escamotée lorsqu'on relève le panneau de façon à dégager l'espace se trouvant sous ce panneau.

On a proposé divers dispositifs pour dégager ou améliorer l'accès au coffre à bagages d'un véhicule automobile, en particulier pour assurer un escamotage automatique de la plage arrière de rangement lorsqu'on relève le hayon. Mais ces dispositifs sont généralement complexes, donc coûteux et peu fiables.

Le brevet français 2 222 852 ou la demande de brevet allemand publiée 2 659 684 décrivent une tablette de rangement dont un bord transversal est articulé autour d'un axe solidaire de la carrosserie d'un véhicule automobile et dont le bord opposé est relié par des moyens élastiques au hayon du véhicule. Lorsqu'on relève le hayon, celui-ci entraîne la tablette qui se relève également ; mais l'angle de relevage de cette tablette est faible ; la tablette n'est pas escamotée et gêne l'accès au coffre à bagages.

La présente invention a pour objet une tablette de rangement qui est, au contraire, amenée automatiquement en position escamotée, et cela par des moyens très simples.

La demande de brevet européen n° 0028184 décrit une tablette de rangement dont un bord est articulé sur un panneau, tel qu'un hayon, monté pivotant autour d'un axe horizontal entre deux positions extrêmes, la tablette étant destinée à prendre une position horizontale lorsque ledit panneau est dans sa position extrême basse et à être escamotée pratiquement contre ledit panneau lorsque ce dernier est dans sa position extrême relevée, et qui est suspendue bilatéralement au panneau, par des cordons souples, à son bord opposé à son articulation ou au voisinage de ce bord. Dans cette tablette les cordons souples sont montés coulissants dans un palier solidaire du panneau et sont accrochés à un point fixe de la structure supportant ce panneau ; une butée est interposée sur chaque cordon souple entre le point de fixation de ce dernier sur la structure et le palier. Cette tablette est amenée automatiquement en position escamotée, et cela par des moyens simples.

La présente invention a pour objet une tablette de rangement qui est du même type que celle décrite dans la demande de brevet européen ci-dessus, mais dans laquelle le montage des cordons souples est différent et ne nécessite pas la présence de butées.

Cette tablette est caractérisée en ce que les cordons souples sont accouplés en série avec des moyens élastiques, la longueur totale des cordons souples et des moyens élastiques étant ainsi variable de sorte qu'elle peut diminuer de façon que la tablette se rapproche du panneau lorsque ce dernier est soulevé vers sa position extrême relevée, et en ce que ces moyens élastiques exercent sur ces cordons, lorsque la tablette est horizontale, un effort de traction dirigé en sens contraire à celui de l'effort dû au poids de la tablette, et, au plus, égal à ce dernier effort.

Lorsque la tablette est horizontale, l'effort dû au poids de la tablette est prédominant de sorte que cette tablette est maintenue en appui sur une butée ou un support.

Lorsqu'on relève le panneau mobile, la tablette devient progressivement oblique de sorte que l'effort, exercé sur le cordon et dû au poids de cette tablette, diminue. L'effort exercé par les moyens élastiques devient prépondérant de sorte que la longueur totale des cordons et des moyens élastiques diminue et que la tablette pivote par rapport au panneau en se rapprochant de ce panneau.

Il pourrait être prévu des moyens élastiques propres à chaque cordon. Mais, dans un mode de réalisation avantageux de l'invention, les deux cordons souples sont accouplés en série avec un même élément élastique interposé entre eux, en formant un ensemble de longueur variable. Cet ensemble peut être partiellement logé dans un fourreau fixé sur la tablette, parallèlement à son axe d'articulation sur le panneau relevable, à proximité du bord opposé à cet axe.

On a décrit ci-après, à titre d'exemple non limitatif, un mode de réalisation d'une tablette ou plage arrière d'un véhicule automobile accouplée selon l'invention au hayon arrière de ce véhicule, avec référence au dessin annexé dans lequel :

La Figure 1   montre en élévation la tablette en position d'utilisation, le hayon étant rabattu ;

La Figure 2 est une vue semblable à la Figure 1, au cours du relevage du hayon ;

La Figure 3 est une vue semblable à la Figure 1, le hayon étant relevé ;

La Figure 4   est une vue en coupe axiale d'une partie des moyens de suspension de la tablette.

Au dessin, on voit en 1 la caisse ou carrosserie d'un véhicule automobile qui comporte à sa partie arrière un hayon 2 monté pivotant en 3 sur la caisse 1. La référence 4 désigne le dossier du siège arrière du véhicule.

Une tablette de rangement 5 est articulée sur le hayon 2 autour d'un axe 6 situé sensiblement dans le plan horizontal du bord supérieur du dossier 4. La tablette 5 comporte à sa partie avant un fourreau 7 parallèle à l'axe 6 et pouvant venir reposer sur une console 8 portée par le bord supérieur du dossier 4.

A l'intérieur du fourreau 7 est disposé un élément élastique 9, qui est constitué par exemple par un sandow et dont chacune des extrémités est reliée par l'intermédiaire d'une butée 10 à un cordon souple 11. Celui-ci traverse un palier 12 fixé à l'extrémité correspondante du fourreau 7 et est terminé par une rondelle d'arrêt 13 et un anneau 14 ; cet anneau est fixé à un crochet 15 fixé au hayon 2 et éloigné de l'axe 6 d'une distance sensiblement égale à la longueur de la tablette 5. L'élément élastique 9, en tirant sur le cordon 11, tend ainsi à faire pivoter la tablette 5 vers le haut.

Les butées 10 ont une section transversale voisine de la section interne du fourreau 7 de sorte que l'élément élastique 9 et les cordons 11 sont maintenus dans l'axe du fourreau et ne risquent pas de frotter contre la paroi de celui-ci. Pour faciliter le déplacement de ces butées, le fourreau peut comporter un revêtement intérieur anti-friction 16.

Les caractéristiques de l'élément élastique 9 sont déterminées d'une part de manière que, lorsque les anneaux 14 sont libres, il rappelle les cordons 11 à l'intérieur du fourreau et maintienne les rondelles d'arrêt 13 en appui sur les paliers 12, et d'autre part, de manière que, lorsque les anneaux 14 sont fixés aux crochets 15, il exerce sur les cordons 11 des efforts de traction compensant au plus l'action de la gravité qui tend à rabattre la tablette 5 et à appliquer le fourreau 5 sur la console 8.

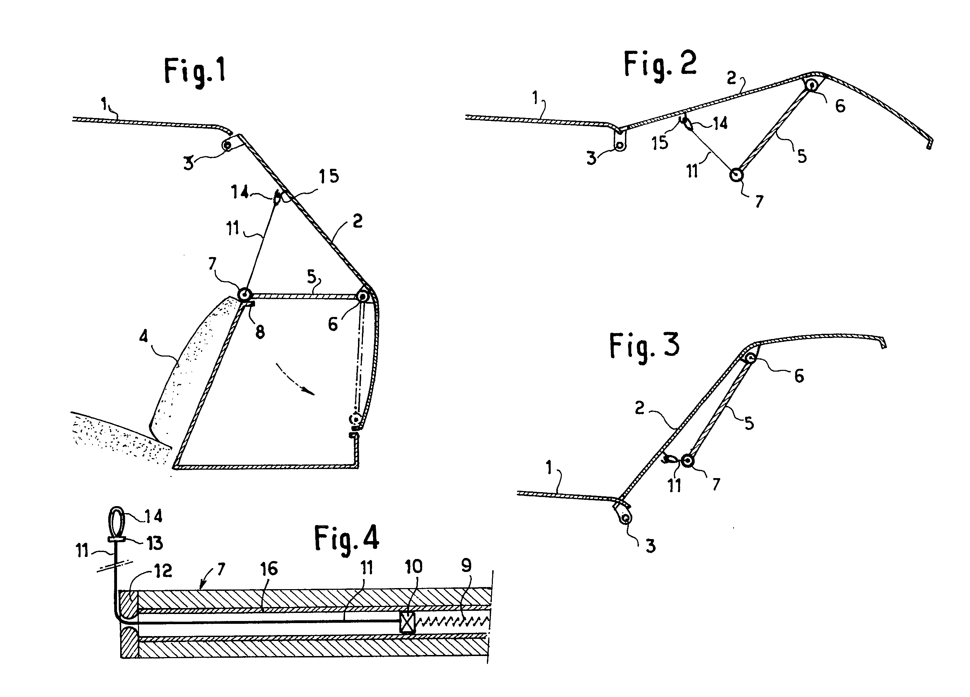

La Figure 1 montre le hayon 2 en position normale de fermeture. La Tablette 5 est horizontale et repose sur la console 8, son poids étant pratiquement équilibré par la traction exercée sur les cordons 11 par l'élément élastique 9. On peut éventuellement prévoir un moyen pour verrouiller provisoirement la tablette en position afin que cette dernière soit stable malgré les sollicitations dynamiques auxquelles la tablette peut être soumise.

Lorsqu'on relève le hayon 2, celui-ci entraîne la tablette 5 et tend à l'amener dans la position verticale. Mais au fur et à mesure que la tablette se redresse, le couple dû à son poids diminue de sorte que les efforts de traction exercés par l'élément élastique 9 deviennent prépondérants et que l'angle formé par la tablette et le hayon diminue progressivement (Figures 2 et 3). La tablette se rapproche du hayon et finit par se plaquer pratiquement sur lui (Figure 3), en dégageant ainsi totalement l'accès aux bagages stockés dans le coffre.

Lorsqu'on abaisse à nouveau le hayon, la tablette s'écarte progressivement du hayon, et, en fin de mouvement, le fourreau 7 vient reposer sur la gouttière 8.

Lorsque le hayon est en position fermée, on peut décrocher les anneaux 14. Si on déplace le dossier 4 pour dégager le fourreau 7 de la gouttière 8, la tablette pivote alors vers le bas autour de l'axe 6 et vient occuper la position représentée en traits mixtes à la Figure 1 et dans laquelle elle est plaquée contre la partie inférieure du hayon. Les cordons 11 sont alors escamotés à l'intérieur du fourreau 7, les rondelles d'arrêt 13 étant en appui contre les paliers 12.

Les butées 10 peuvent être disposées de manière à venir au contact des paliers 12 lorsque la tablette 5 est horizontale. Elles forment ainsi arrêtoirs et déterminent une position stable de la tablette 5. On peut alors éventuellement supprimer la console 8 et même rabattre ou retirer le dossier 4, ce qui permet de disposer une charge longue dans le véhicule.

Il va de soi que la présente invention ne doit pas être considérer comme limitée au mode de réalisation décrit et représenté, mais en couvre, au contraire, toutes les variantes.

## Revendications

1. Tablette de rangement dont un bord est articulé sur un panneau (2), tel qu'un hayon, monté pivotant autour d'un axe horizontal (3) entre deux positions extrêmes, la tablette (5) étant destinée à prendre une position horizontale lorsque ledit panneau (2) est dans sa position extrême basse et à être escamotée pratiquement contre ledit panneau (2) lorsque ce dernier est dans sa position extrême relevée, et qui est suspendue bilatéralement au panneau, par des cordons souples (11), à son bord opposé à son articulation (6) ou au voisinage de ce bord, caractérisée en ce que les cordons souples (11) sont accouplés en série avec des moyens élastiques (9), la longueur totale des cordons souples (11) et des moyens élastiques (9) étant ainsi variable de sorte qu'elle peut diminuer de façon que la tablette (5) se rapproche du panneau (2) lorsque ce dernier est soulevé vers sa position extrême relevée, et en ce que ces moyens élastiques (9) exercent sur ces cordons (11), lorsque la tablette (5) est horizontale, un effort de traction dirigé en sens contraire à celui de l'effort dû au poids de la tablette, et, au plus, égal à ce dernier effort.

2. Tablette selon la revendication 1, caractérisée en ce que les deux cordons souples (11) sont accouplés en série avec un même élément élastique (9) interposé entre eux, en formant un ensemble de longueur variable.

3. Tablette selon la revendication 2, caractérisée en ce que ledit ensemble est partiellement logé dans un fourreau (7) fixé sur la tablette (5), parallèlement à son axe d'articulation (6) sur le panneau relevable (2), à proximité du bord opposé à cet axe.

4. Tablette selon la revendication 3, caractérisée en ce que le fourreau (7) comporte, à chacune de ses extrémités, un palier (12) dans lequel l'un des cordons (11) peut coulisser.

5. Tablette selon la revendication 3 ou 4, caractérisée en ce que chacun des cordons (11) porte, à l'intérieur du fourreau (7) une butée (10) mobile axialement dans ce fourreau et assurant le guidage du cordon dans ledit fourreau.

6. Tablette selon la revendication 5, caractérisée en ce que la butée (10) est disposée de manière à venir au contact d'une paroi (12) fermant latéralement le fourreau, lorsque la tablette est en position horizontale.

7. Tablette selon l'une quelconque des revendications précédentes, caractérisée en ce que chacun des cordons souples (11) est muni, à son extrémité libre, d'un anneau ou crochet (14), propre à la fixer de manière amovible au panneau mobile (2).

8. Tablette selon l'une quelconque des revendications 3 à 6 et la revendication 7, caractérisée en ce que l'élément élastique est déterminé de manière à ramener pratiquement totalement chacun des cordons souples (11) à l'intérieur du fourreau (7) lorsque ce cordon est détaché du panneau mobile (2).

9. Tablette selon l'une quelconque des revendications précédentes, caractérisée en ce que chacun des cordons souples (11) est fixé au panneau mobile (2) en un point éloigné de l'axe d'articulation (6) de ce panneau, d'une distance sensiblement égale à la longueur de la tablette (5).

**Claims**

1. Shelf element of which one edge is articulated on a panel (2), such as a rear door, mounted to pivot about a horizontal axis (3) between two end positions, the shelf (5) being adapted to take a horizontal position when said panel (2) is in its lower end position and to be retracted virtually against said panel (2) when the latter is in its raised end position, and which is suspended bilaterally from the panel, by flexible cords (11), on its edge opposite its articulation (6) or in the vicinity of this edge, characterized in that the fexible cores (11) are coupled in series with elastic means (9), the total length of the flexible cords (11) and of the elastic means (9) thus being variable with the result that is may decrease so that the shelf (5) moves closer to the panel (2) when the latter is raised towards its raised end position, and in that these elastic means (9) exert on these cords (11), when the shelf (5) is horizontal, an effort of traction directed in the direction opposite that of the effort due to the weight of the shelf, and, at the most, equal to this latter effort.

2. Shelf according to Claim 1, characterized in that the two flexible cords (11) are coupled in series with the same elastic element (9) interposed therebetween, forming an assembly of variable length.

3. Shelf according to Claim 2, characterized in that said assembly is partially housed in a sleeve (7) fixed on the shelf (5) parallel to its axis of articulation (6) on the raisable panel (2), near the edge opposite this axis.

4. Shelf according to Claim 3, characterized in that the sleeve (7) comprises, at each of its ends, a bearing (12) in which one of the cords (11) may slide.

5. Shelf according to Claim 3 or 4, characterized in that each of the cords (11) bears, inside the sleeve (7), a stop (10) axially mobile in this sleeve and ensuring guiding of the cord in said sleeve.

6. Shelf according to Claim 5, characterized in that the stop (10) is disposed so as to come into contact with a wall (12) laterally closing the sleeve, when the shelf is in horizontal position.

7. Shelf according to any one of the preceding Claims, characterized in that each of the flexible cords (11) is provided, at its free end, with a ring or hook (14), adapted to removably fix it to the mobile panel (2).

8. Shelf according to one of Claims 3 to 6 and Claim 7, characterized in that the elastic element is determined so as to return each of the flexible cords (11) virtually completely inside the sleeve (7) when this cord is detached from the mobile panel (2).

9. Shelf according to any one of the preceding Claims, characterized in that each of the flexible cords (11) is fixed to the mobile panel (2) at a point remote from the axis of articulation (6) of this panel, by a distance substantially equal to the length of the shelf (5).

**Ansprüche**

1. Ablageplatte, deren einer Rand an einem Wandteil (2), beispielsweise einer Rückwand eines Automobils, um eine horizontale Achse (3) zwischen zwei äußeren Stellungen schwenkbar befestigt ist, wobei vorgesehen ist, daß die Platte (5) eine horizontale Stellung einnimmt, wenn sich das Wandteil (2) in seiner unteren äußeren Stellung befindet, und daß sie praktisch einklappbar am Wandteil (2) ist, wenn sich dieses in seiner aufgeklappten äußeren Stellung befindet, und welche an beiden Seiten des Wandteiles mittels flexibler Schnüre (11) an dessen seinem Gelenk (6) gegenäberliegenden Rand oder nahe diesem Rand aufgehängt ist, dadurch gekennzeichnet, daß die flexiblen Schnüre (11) in Reihe an eine federnde Einrichtung (9) angehängt sind, wobei die Gesamtlänge der Flexiblen Schnüre (11) und der federnden Einrichtung (9) derart änderbar ist, daß sie verringert werden kann, dergestalt, daß sich die Platte (5) dem Wandteil (2) nähert, wenn dieses in seine aufgeklappte äußere Stellung angehoben wird, und daß die federnde Einrichtung (9) in der horizontalen Stellung der Platte (5) auf die Schnüre (11) eine Zugkraft ausübt, welche zu der durch das Gewicht der Platte ausgeübten Kraft entgegengesetzt gerichtet und höchstens gleich dieser Kraft ist.

2. Platte nach Anspruch 1, dadurch gekennzeichnet, daß die beiden flexiblen Schnüre (11) in Reihe an ein und dasselbe federnde Element (9) angehängt sind, welches zwischen ihnen angeordnet ist, wodurch eine Einheit mit änderbarer Länge gebildet ist.

3. Platte nach Anspruch 2, dadurch gekennzeichnet, daß diese Einheit teilweise in einer Hülse (7) angeordnet ist, welche an der Platte (5) parallel zur Achse ihres Gelenks (6) am aufklappbaren Wandteil (2) nahe am dieser Achse gegenüberliegenden Rand befestigt ist.

4. Platte nach Anspruch 3, dadurch gekennzeichnet, daß die Hülse (7) an jedem ihrer Enden ein Lager (12) aufweist, in welchem eine von beiden Schnüren (11) gleiten kann.

5. Platte nach Anspruch 3 oder 4, dadurch gekennzeichnet, daß jede der Schnüre (11) im Inneren der Hülse (7) zu einem Begrenzungsstück (10) führt, welches in der Hülse axial bewegbar ist und für die Führung der Schnur in der Hülse sorgt.

6. Platte nach Anspruch 5, dadurch gekennzeichnet, daß das Begrenzungsstück (10) in der Weise angeordnet ist, daß es mit einer Wandung (12) in Berührung kommt, welche seitlich die Hülse abschließt, wenn sich die Platte in horizontaler Stellung befindet.

7. Platte nach einem der vorhergehenden Ansprüche, dadurch gekennzeichnet, daß jede der flexiblen Schnüre (11) an ihrem freien Ende mit einem Ring oder Haken (14) zur lösbaren Befestigung am beweglichen Wandteil (2) versehen ist.

8. Platte nach einem der Ansprüche 3 bis 6 und Anspruch 7, dadurch gekennzeichnet, daß das federnde Element so angeordnet ist, daß es praktisch jede der flexiblen Schnüre (11) vollständig in das Innere der Hülse (7) zurückführt, wenn diese Schnur vom beweglichen Wandteil (2) gelöst wird.

9. Platte nach einem der vorhergehenden Ansprüche, dadurch gekennzeichnet, daß jede der flexiblen Schnüre (11) am beweglichen Wandteil (2) an einer Stelle befestigt ist, welche von der Achse des Gelenks (6) des Wandteiles um einen annähernd zur Länge der Platte (5) gleichen Abstand entfernt ist.

Fig.1

1

3

14

15

11

2

7

5

6

4

8

Fig. 2

1

2

3

15

14

11

5

6

7

Fig. 3

2

5

6

1

11

7

3

14

13

11

12

Fig. 4

7

16

11

10

9

0 041 016